Europäisches Patentamt

European Patent Office

Office européen des brevets

(11) Veröffentlichungsnummer: **0 003 547**
**B1**

(12) **EUROPÄISCHE PATENTSCHRIFT**

(45) Veröffentlichungstag der Patentschrift: **19.05.82**

(51) Int. Cl.³: **C 02 F 3/12, C 02 F 3/20**

(21) Anmeldenummer: **79100256.1**

(22) Anmeldetag: **30.01.79**

(54) Verfahren zum biologischen Reinigen von Abwasser.

(30) Priorität: **11.02.78 DE 2805793**

(43) Veröffentlichungstag der Anmeldung:
**22.08.79 Patentblatt 79/17**

(45) Bekanntmachung des Hinweises auf die Patenterteilung:
**19.05.82 Patentblatt 82/20**

(84) Benannte Vertragsstaaten:
**BE CH DE FR GB IT NL SE**

(56) Entgegenhaltungen:
**CH - A - 485 476**
**DE - A - 2 554 440**
**US - A - 3 092 678**
**US - A - 3 804 255**
**US - A - 3 872 003**

(73) Patentinhaber: **HOECHST AKTIENGESELLSCHAFT**
**Postfach 80 03 20**
**D-6230 Frankfurt/Main 80 (DE)**

(72) Erfinder: **Leistner, Gerhard, Dr.**
**Freseniusstraße 47**
**D-6384 Schmitten/Taunus (DE)**
Erfinder: **Müller, Gerhard, Dipl.-Ing.**
**Feldbergstraße 76**
**D-6233 Kelkheim (Taunus) (DE)**
Erfinder: **Günther, Sell, Dipl.-Ing.**
**Stettiner Straße 84**
**D-6234 Hattersheim am Main (DE)**
Erfinder: **Bauer, Alexander, Dr.**
**Lerchenweg 3**
**D-6233 Kelkheim (Taunus) (DE)**

# Verfahren zum biologischen Reinigen von Abwasser

Gegenstand der Erfindung ist ein Verfahren zum biologischen Reinigen von Abwasser durch Begasen eines Schlamm-Wasser-Gemisches in einem 10 bis 30 m hohen Belebungsraum, dem kontinuierlich Abwasser, Belebtschlamm und Luft zugeführt und eine äquivalente Menge Schlamm-Wasser-Gemisch entnommen wird.

Bei vielen Prozessen entstehen organisch beladene Abwässer. Für die Reinigung solcher Abwässer sind Verfahren zum Eliminieren der gelösten organischen Verbindungen auf aerobem Wege durch Mikroorganismen bekannt. Diese Verfahren werden meistens in flachen Belebungsbecken und Nachklärbecken durchgeführt. Die Nachteile dieser in solchen Anlagen durchgeführten Verfahren, z.B. Geruchsbelästigung der Umgebung aufgrund hoher Abluftmengen, hoher Lärmpegel, großer Platzbedarf sowie hohe Investitions- und Energiekosten sind allgemein bekannt.

Nach der deutschen Offenlegungsschrift 25 54 495 ist es bekannt, Abwasser in hohen zylindrischen Türmen ähnlich einer Blasensäule zu reinigen. Zum Nachklären des Schlamm-Wasser-Gemisches sind am Turmrand Nachklärbecken angehängt, was hohe Investitionskosten erfordert. Da der Turm ohne jegliche Inneneinbauten konzipiert ist, ist die Raumbelastung vergleichsweise niedrig. Die Begasung erfolgt ausschließlich am Boden des Turmes, wodurch der spezifische Energiebedarf für dieses Verfahren relativ hoch ausfällt.

Nach der deutschen Offenlegungsschrift 25 54 440 ist ein Verfahren und eine Vorrichtung zum Umwälzen eines Gemisches aus einer Flüssigkeit und einem Gas bekannt. Das Verfahren soll sich zum Fermentieren eignen. Die Vorrichtung soll ein Schlaufenreaktor von 20 bis 50 m Höhe sein.

Nach der amerikanischen Patentschrift 3 872 003 ist ein Verfahren und eine Vorrichtung zum Behandeln von Abwasser bekannt. Das Schlamm-Wasser-Luft-Gemisch wird in Schlaufen geführt und anschließend in einem eigens hierfür vorgesehenen Abschnitt entgast.

Nachteilig ist, daß beim Entgasen eine Rückvermischung dieses Teiles des Schlamm-Wasser-Gemisches mit dem in der Schlaufe geführten Teil stattfindet. Das führt bei der der Entgasung nachfolgenden Schlammabtrennung zu unerwünschter Flotation des Schlammes. Eine zusätzliche Entgasung etwa entsprechend der in der deutschen Offenlegungsschrift 25 54 495 beschriebenen ist erforderlich.

Hier will die Erfindung Abhilfe schaffen. Die Erfindung löst die Aufgabe dadurch, daß*) im Belebungsraum mit Luft, sauerstoffhaltiger Lust oder Sauerstoff begast und mit Hilfe von Leitblechen in wenigstens einer Schlaufe geführt

*) das Schlamm-Wasser-Gemisch.

wird und daß das die Schlaufe verlassende Schlamm-Wasser-Gemisch über eine oberhalb der Leitbleche angeordnete, der Vermeidung der Rückvermischung mit Schlamm-Wasser-Gemisch der Schlaufe dienende Lochplatte vor Verlassen des Belebungsraumes einer biologischen Nachreaktion zugeführt wird.

Dabei ist es grundsätzlich möglich, die Luft in den abwärts gerichteten Strom der Schlaufe einzuleiten. Wird die Luft in den abwärts gerichteten Strom der Schlaufe eingeleitet, ist es zweckmäßig, die Schlaufe durch zusätzliche mechanische Energie entgegen den Auftriebskräften der Gasblasen in Bewegung zu halten. Abhängig vom Querschnitt des Belebungsraumes kann das Schlamm-Wasser-Gemisch mit der Luft in 1—15 Schlaufen geführt werden.

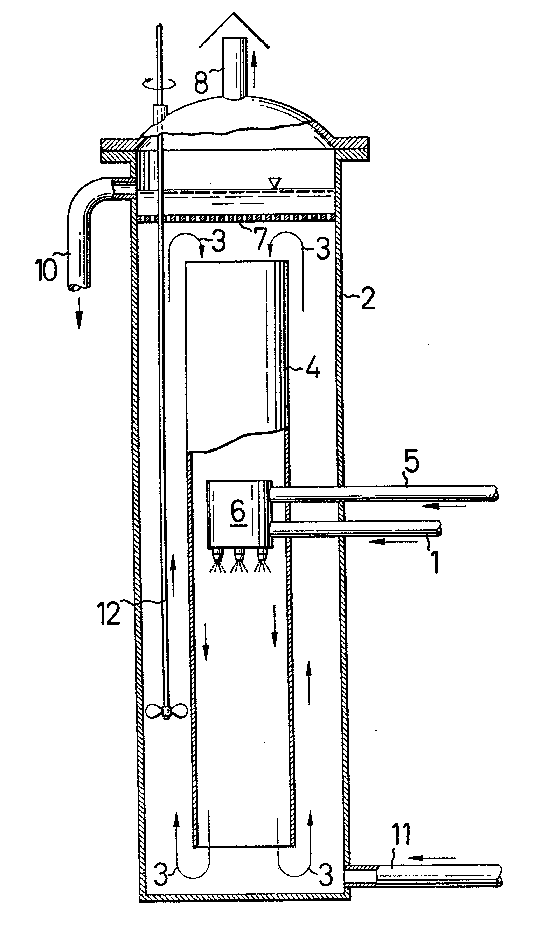

Nachfolgend wird die Erfindung anhand der Figur, die einen schematischen Aufbau einer Anlage zum Durchführen des Verfahrens in beispielsweiser Ausführung zeigt, näher erläutert.

Das zu reinigende Abwasser (Rohwasser) wird über Leitung 1 in den den Belebungsraum bildenden Reaktor 2 eingeleitet. Das Schlamm-Wasser-Gemisch und die Luft werden im Belebungsraum in mindestens einer Schlaufe 3 geführt. Je nach der Dimension des Reaktors 2 sind bis zu 15 Schlaufen erwünscht, was durch eine entsprechende Anzahl von Leitblechen 4 erreicht wird. Die Luft wird über Leitung 5 und Verteilerorgan 6 zugeführt. Sie kann in den aufwärts strömenden Teil oder entgegengesetzt den Auftriebskräften in den abwärtsströmenden Teil der Schlaufe eingeleitet werden. Prinzipiell kann sie an jeder Stelle der Schlaufe in das Schlamm-Wasser-Gemisch eingeleitet werden. Wird die Luft in den abwärts strömenden Teil der Schlaufe eingeleitet, ist es zweckmäßig, das Gemisch durch zusätzliche mechanische Energie, z.B. durch einen Rührer 12 oder durch einen mittels Pumpe angetriebenen Schlamm-Wasser-Kreislauf, bei dem das Gemisch am Boden des Reaktors abgenommen und im Bereich der Lufteinleitung der Schlaufe wieder zugegeben wird, entgegen den Auftriebskräften der Gasblasen in Bewegung zu halten. Das Schlamm-Wasser-Gemisch wird vor Verlassen des Belebungsraumes einer Nachreaktion zugeführt. Dazu ist der Reaktor 2 mit einer Lochplatte 7 versehen, um Rückvermischungen des Gemisches mit der Schlaufe zu vermeiden. Die Abluft verläßt den Belebungsraum über Leitung 8. Das Schlamm-Wasser-Gemisch wird in Höhe des Flüssigkeitsspiegels über Leitung 10 entnommen. Danach kann das Gemisch einer Entgasung und Klärung durch Sedimentation zugeführt werden (nicht dargestellt). Über Leitung 11 wird Belebtschlamm dem Belebungsraum zugeführt.

Unter Luft soll atmosphärische Luft, mit Sauerstoff angereicherte Luft und reiner Sauerstoff verstanden werden.

### Beispiel

Der Reaktor ist 20 m hoch und hat einen Durchmesser von 5 m. In seinem Belebungsraum ist ein Leitrohr von 16 m Höhe und 2,8 m Durchmesser angeordnet. Der Schlamm-Wasser-Gemisch-Spiegel ist 18 m hoch. Die Luft und das Rohwasser (Abwasser) werden 9 m unterhalb des Flüssigkeits-Spiegels in den abwärts strömenden Teil des Schlamm-Wasser-Gemisches, das in einer schlaufenförmigen Bewegung gehalten wird, eingeleitet. Belebtschlamm wird am Fuß in den Belebungsraum eingeleitet. Schlamm-Wasser-Gemisch wird in Höhe des Flüssigkeitsspiegels dem Reaktor entnommen. Es werden 60 m³/h Abwasser mit einem $BSB_5$-Wert von 1200 mg/l und 510 Nm³/h Luft in den Reaktor eingeleitet. Am Fuß des Reaktors werden 60 m³/h Belebtschlamm in den Reaktor eingeführt. Die Temperatur im Reaktor beträgt 20°C. Das dem Reaktor entnommene Wasser hat einen $BSB_5$-Wert von 30—50 mg/l.

### Patentansprüche

1. Verfahren zum biologischen Reinigen von Abwasser durch Begasen eines Schlamm-Wasser-Gemisches in einem 10 bis 30 m hohen Belebungsraum, dem kontinuierlich Abwasser, Belebtschlamm und Luft zugeführt und eine äquivalente Menge Schlamm-Wasser-Gemisch entnommen wird, dadurch gekennzeichnet, daß das Schlamm-Wasser-Gemisch im Belebungsraum mit Luft, sauerstoffhaltiger Luft oder Sauerstoff begast und mit Hilfe von Leitblechen in wenigstens einer Schlaufe geführt wird und daß das die Schlaufe verlassende Schlamm-Wasser-Gemisch über eine oberhalb der Leitbleche angeordnete, der Vermeidung der Rückvermischung mit Schlamm-Wasser-Gemisch der Schlaufe dienende Lochplatte vor Verlassen des Belebungsraumes einer biologischen Nachreaktion zugeführt wird.

2. Verfahren nach Anspruch 1, dadurch gekennzeichnet, daß die Luft in den aufwärts gerichteten Strom der Schlaufe eingeleitet wird.

3. Verfahren nach Anspruch 1, dadurch gekennzeichnet, daß die Luft in den abwärts gerichteten Strom der Schlaufe eingeleitet und die Schlaufe durch zusätzliche mechanische Energie entgegen den Auftriebskräften der Glasblasen in Bewegung gehalten wird.

4. Verfahren nach Ansprüchen 1 bis 3, dadurch gekennzeichnet, daß das Schlamm-Wasser-Gemisch mit der Luft im Belebungsraum in 1 bis 15 Schlaufen geführt wird.

### Claims

1. A process for the biological purification of waste water by treating a sludge-water mixture in an activation chamber 10 to 30 m in height, continuously charged with waste water, activated sludge and air and from which an equivalent quantity of sludge-water mixture is discharged, which comprises treating said sludge-water mixture in the activation chamber with air, air enriched with oxygen or pure oxygen, guiding it in at least one loop-shaped flow by means of baffle plates and submitting that portion of the sludge-water mixture not guided in a loop-shaped flow to a biological after-reaction by passing it through a perforated plate located above the baffle plates and preventing backmixing with the sludge-water mixture in loop-shaped flow prior to leaving the activation chamber.

2. The process of claim 1, wherein air is charged into that portion of the mixture in loop-shaped flow that moves upwardly.

3. The process of claim 1, wherein air is charged into that portion of the mixture in loop-shaped flow that moves downwardly while maintaining the loop-shaped flow of the mixture by additional mechanical energy, contrary to the lifting forces of the gas bubbles.

4. The process of any of claims 1 to 3, wherein the sludge-water mixture and air are guided in 1 to 15 loop-shaped flow paths within the activation chamber.

### Revendications

1. Procédé pour l'épuration biologique d'eaux usées par aération d'un mélange boues-eau dans une chambre d'activation de 10 à 30 m de hauteur dans laquelle on envoie en continu les eaux usées, des boues activées et de l'air et d'où l'on évacue en continu une quantité équivalente du mélange boues-eau, procédé caractérisé en ce que le mélange boues-eau est traité dans la chambre d'activation par l'air, de l'air contenant de l'oxygène ou de l'oxygène et envoyé au moyen de tôles de guidage dans au moins un circuit et en ce que le mélange boues-eau quittant le circuit est envoyé avant de quitter la chambre d'activation à une réaction subséquente biologique par l'intermédiaire d'une plaque perforée disposée au-dessus de la tôle de guidage et qui évite le mélange en retour avec le mélange boues-eau du circuit.

2. Procédé selon la revendication 1, caractérisé en ce que l'air est injecté dans le courant du circuit en mouvement ascensionnel.

3. Procédé selon la revendication 1, caractérisé en ce que l'air est injecté dans le courant du circuit dirigé vers le bas et en ce que le circuit est maintenu en mouvement par une énergie mécanique additionnelle s'opposant aux forces ascensionnelles des bulles de gaz.

4. Procédé selon les revendications 1 à 3, caractérisé en ce que le mélange boues-eau est envoyé avec l'air dans la chambre d'activation dans 1 à 15 circuits.